# EUROPÄISCHE PATENTSCHRIFT

(11) **EP 1 050 892 B1**
(45) Veröffentlichungstag und Bekanntmachung des Hinweises auf die Patenterteilung: **02.04.2008**
(21) Anmeldenummer: 00109310.3
(22) Anmeldetag: 29.04.2000
(51) Int. Cl.: H01F 36/00, H02H 7/00

(54) **Anordnung zur Strombegrenzung mit einem supraleitenden Transformator**
Current limiting device for superconducting transformer
Dispositif limiteur de courant pour transformateur superconducteur

(30) Priorität: 04.05.1999 DE 19920443
(43) Veröffentlichungstag der Anmeldung: 08.11.2000
(73) Patentinhaber: ABB RESEARCH LTD., 8050 Zürich (CH)
(72) Erfinder: Zueger, Harry, 1219 Chatelaine (GE) (CH); Bonmann, Dietrich, 53340 Meckenheim (DE); Paul, Willi, 5430 Wettingen (CH)
(74) Vertreter: ABB Patent Attorneys

(56) Entgegenhaltungen:
- GB-A- 1 230 579
- TIXADOR P ET AL: "HYBRID AC SUPERCONDUCTING CURRENT LIMITER: SMALL-SCALE EXPERIMENTALMODEL" IEE PROCEEDINGS: GENERATION, TRANSMISSION AND DISTRIBUTION,GB,INSTITUTION OF ELECTRICAL ENGINEERS, Bd. 141, Nr. 2, PART C, 1. März 1994 (1994-03-01), Seiten 117-124, XP000452049 ISSN: 1350-2360

## Beschreibung

### TECHNISCHES GEBIET

Die vorliegende Erfindung bezieht sich auf das Gebiet der technischen Anwendung von Supraleitern. Sie betrifft eine Anordnung sowie ein Verfahren zur Strombegrenzung mit einem supraleitenden Transformators.

### STAND DER TECHNIK

Bei einem beispielsweise für ein elektrisches Energieverteilungsnetz konzipierten supraleitenden Strombegrenzer wird ausgenutzt, dass ein auf eine Temperatur unterhalb der kritischen Temperatur T_{c} gekühlter Supraleiter seine Supraleitfähigkeit nur solange beibehält, als die Stromdichte eines ihn durchfliessenden Stromes unterhalb eines gewissen Grenzwertes bleibt. Dieser Grenzwert wird herkömmlich als kritische Stromdichte j_{c} oder, bezogen auf einen bestimmten Leiterquerschnitt, als kritische Stromstärke I_{c} bezeichnet und ist grundsätzlich abhängig von der Temperatur des Supraleiters und dem ihn durchsetzenden Magnetfeld. Überschreitet im Kurzschlussfall die Stromstärke im Leiter den kritischen Wert I_{c}, erhöht sich sein elektrischer Widerstand und der Kurzschlussstrom wird begrenzt. Im Falle der DE 44 18 050 A1 erfolgt dies über eine Drosselspule, deren Impedanz aufgrund ihres nicht mehr abgeschirmten Eisenkerns sprunghaft ansteigt.

Eine Hauptanforderung an Strombegrenzer jeglicher Art in elektrischen Energieverteilungsnetzen ist, dass sie einen Kurzschlussstrom auf ein unschädliches Mass beschränken und nach Wegfall des Kurzschlusses den Nennstrom sofort wieder leiten. Insbesondere soll der Stromkreis nicht unterbrochen werden müssen, damit ein Verbraucher, der durch denselben Strombegrenzer gesichert wird wie der Kurzschlusspfad, nicht gänzlich von der Energiequelle abgeschnitten wird.

Wird ein Supraleiter zu lange mit einem Überstrom belastet, wärmt er sich bis weit über die kritische Temperatur T_{c} auf und kann unter Umständen Schaden nehmen. Ein derart erwärmter Strombegrenzer weist zudem auch dann noch einen erheblichen Widerstand auf, wenn er nach der Behebung des Kurzschlusses nur noch den Nennstrom zu leiten hat. Der darauffolgende Abkühlvorgang auf eine Temperatur unterhalb der kritischen Temperatur T_{c} dauert aufgrund physikalisch vorgegebener Grenzen hinsichtlich des Wärmeüberganges zwischen Supraleiter und

Kühlmedium eine gewisse Mindestzeitdauer. Diese ist oft länger als die Dauer des eigentlichen Kurzschlusses, so dass die Stromversorgung des Verbrauchers viel länger als nötig unterbrochen oder zumindest eingeschränkt ist.

Es gilt also, in einem Strombegrenzer auf Supraleiterbasis denjenigen supraleitenden Abschnitt vor einer thermischen Überbelastung zu schützen, der im Normalbetrieb den Nennstrom verlustlos leitet. Dazu eignet sich ein parallelgeschalteter Entlastungspfad, welcher im Normalbetrieb wenig oder nichts zur Stromleitung beiträgt und dafür mithilft, den Kurzschlussstrom zu tragen.

Falls in einem ansonsten normalleitenden Stromkreis ein supraleitender Transformator vorgesehen ist, ergibt sich die Möglichkeit, diesen zusätzlich mit einer strombegrenzenden Eigenschaft auszustatten. Im Patent US 4,336,561 ist ein derartiger Transformator offenbart, bei welchem sowohl primär wie auch sekundärseitig jeweils parallelgeschaltete Haupt-und Nebenwicklungen vorgesehen sind. Die Hauptwicklungen sind so ausgelegt, dass sie im Dauerbetrieb den Nennstrom ohne resistive Verluste leiten. Die beiden als Entlastungselemente konzipierten Nebenwicklungen sind nicht-perfekt gekoppelt, d.h. sie zeichnen sich durch eine substantielle Streu-Impedanz ähnlich einer freistehenden Drosselspule aus. Aus diesem Grunde fliesst durch die Nebenwicklungen im Dauerbetrieb praktisch kein Strom. Wird nun der Nennstrom im Kurzschlussfall überschritten, treten sowohl die primär- wie auch die sekundärseitige Hauptwicklung in einen resistiven Zustand über und der Stromfluss kommutiert zumindest teilweise auf die Nebenwicklungen. Deren Streuimpedanz stellt sich nun einem unbegrenzten Stromanstieg entgegen. Ein Schalter kann im Kurzschlussfall die Hauptwicklungen unterbrechen um diese vor einer Überbelastung zu schützen. Die Nebenwicklungen sind so dimensioniert, dass sie unter allen Umständen supraleitend bleiben, d.h. ihr Leiterquerschnitt ist entsprechend auf ein Vielfaches des Nennstromes ausgelegt. Dies bedingt vor allem für die primärseitige Nebenwicklung einen erheblichen Aufwand an supraleitendem Material. Die Patentschrift GB 1 230 579 zeigt einen Transformator, welcher primär- und sekundärseitig jeweils zu einer supraleitenden Hauptwicklung eine parallelgeschaltete normalleitende Entlastungswicklung aufweist sowie über Mittel verfügt, einen Kurzschlussstrom von der Haupt- in die Entlastungswicklung zu kommutieren.

### DARSTELLUNG DER ERFINDUNG

Der Erfindung liegt die Aufgabe zugrunde, eine Strombegrenzungsanordnung basierend auf einem supraleitenden Transformator anzugeben, die möglichst unterbrechungsfrei einen Verbraucher mit Energie versorgt und mit einem geringen Aufwand an supraleitendem Material auskommt. Die Aufgabe wird gelöst durch eine einen supraleitenden Transformator umfassende Anordnung mit den Merkmalen des ersten Patentanspruchs sowie ein Verfahren zur Strombegrenzung mit den Merkmalen des siebten Patentanspruchs. Den Erfindungsgedanken vorteilhaft weiterbildende Merkmale sind Gegenstand der Unteransprüche.

Kern der Erfindung ist es, bei einem supraleitenden Transformator einen zu einer ersten supraleitenden Primär- oder Sekundärwicklung parallelen Entlastungspfad in Form einer zweiten, normalleitenden Primär- beziehungsweise Sekundärwicklung vorzusehen. Im Normalbetrieb fliesst infolge des ohmschen Widerstandes des Normalleiters praktisch kein Strom durch diese zweite oder Entlastungs- Wicklung. Übersteigt jedoch im Kurzschlussfall der Strom in der ersten Wicklung den kritischen Wert, baut sich dort ebenfalls ein elektrischer Widerstand auf und der alternative normalleitende Pfad durch die zweite Wicklung übernimmt einen Teil des Kurzschlussstromes.

Die Erfindung zeichnet sich Ferner dadurch aus, dass die erste, supraleitende Wicklung so dimensioniert ist, dass deren kritische Stromstärke I_{c} im Wesentlichen mit dem im Normalbetrieb zu tragenden primär- beziehungsweise sekundärseitigen Nennstrom IN übereinstimmt.

Die erfindungsgemässe Entlastungswicklung ist demnach entweder primär- oder sekundärseitig ausgeführt und auf der gegenüberliegenden Sekundär- beziehungsweise Primärseite ausschliesslich eine erste, supraleitende Wicklung vorgesehen. Letztere ist so dimensioniert, dass sie auch im Kurzschlussfall supraleitend bleibt, d.h. ein Mehrfaches ihres Nennstromes IN tragen kann.

Zur Erhöhung der Impedanz der zweiten, normalleitenden Entlastungswicklung ist diese in einem Ausführungsbeispiel mit einer induktiven Komponente versehen. Dazu ist die zweite Wicklung so gewickelt, dass ein Mindestabstand zwischen ihr und der gegenüberliegenden Sekundär- beziehungsweise Primärwicklung eine zusätzliche Streuinduktivität zur Folge hat.

In einem weiteren Ausführungsbeispiel ist ein Schalter in Serie zur ersten, supraleitenden Wicklung vorgesehen, welcher kurz nach dem Auftreten eines Kurzschlusses geöffnet wird und den Strom durch die supraleitende Wicklung unterbricht. Dadurch ist letztere optimal geschützt, erwärmt sich nur unbedeutend und kann nach dem Wegfall des Kurzschlusses sofort wieder in den Stromkreis geschaltet werden.

### KURZE BESCHREIBUNG DER FIGUREN

Nachfolgend wird die Erfindung anhand von Ausführungsbeispielen im Zusammenhang mit den Zeichnungen näher erläutert. Es zeigen
Fig.1 einen Stromkreis mit einem supraleitenden Transformator gemäss einem ersten Ausführungsbeispiel der Erfindung;
Fig.2 einen Stromkreis mit einem supraleitenden Transformator gemäss einem zweiten Ausführungsbeispiel der Erfindung;
Fig.3 eine schematische Darstellung der Anordnung gemäss Fig.2 mit einer Schnittdarstellung des supraleitenden Transformators;
Fig.4 einen Stromkreis mit einem supraleitenden Transformator gemäss einem dritten Ausführungsbeispiel der Erfindung.

Die in den Zeichnungen verwendeten Bezugszeichen sind in der Bezugszeichenliste zusammengefasst. Grundsätzlich sind gleiche Teile mit denselben Bezugszeichen versehen.

### WEGE ZUR AUSFÜHRUNG DER ERFINDUNG

Im Folgenden ist die erfindungsgemässe Entlastungswicklung auf einer zur besseren Lesbarkeit willkürlich als Primärseite bezeichneten Seite des supraleitenden Transformators dargestellt. Wie weiter unten erläutert, bedeutet dies keinerlei Einschränkung des vorliegenden Gegenstandes.

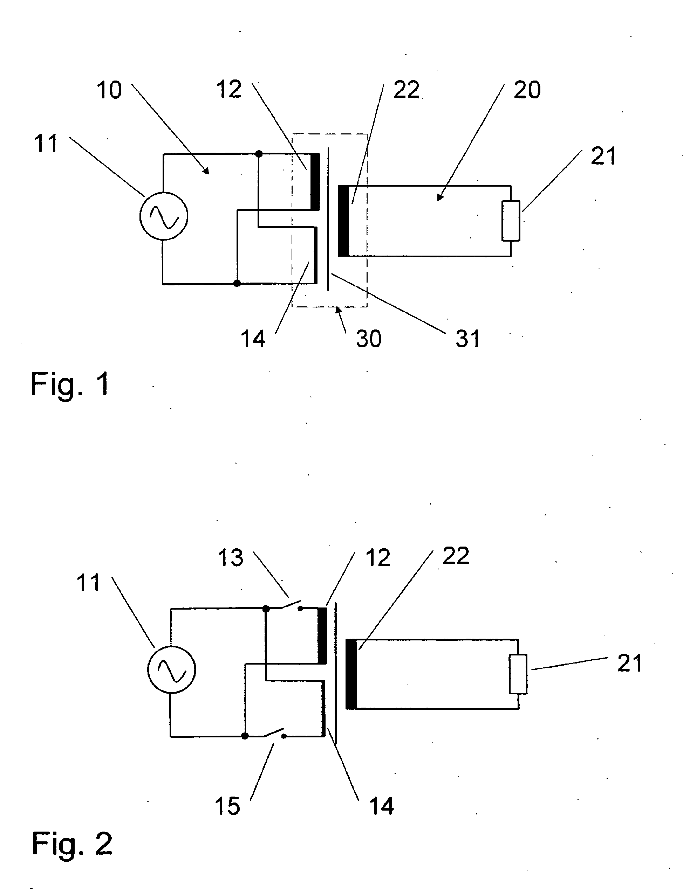

In Fig. 1 ist ein Stromkreis skizziert, zu welchem ein Primärkreis 10 mit einer Wechselstromquelle 11, ein Sekundärkreis 20 mit einem Verbraucher 21 und ein zwischen Primär-und Sekundärkreis angeordneter Transformator 30 mit einem Transformatorkern 31 gehören. Im Normalbetreib erzeugt die Quelle 11 einen primärseitigen Nennstrom I_{N}(P), während ein sekundärseitiger Nennstrom I_{N}(S) durch den Verbraucher 21 fliesst. Der Transformator 30 weist eine erste supraleitende Primärwicklung 12 auf, welche den primärseitigen Nennstrom I_{N}(P) verlustlos leitet. Parallel zur ersten Primärwicklung 12 ist eine zweite, normalleitende Primärwicklung 14 als Entlastungswicklung vorgesehen. Beide Primärwicklungen 12, 14 stehen über den Transformatorkern 31 mit einer Sekundärwicklung 22 des Transformators 30 in Wechselwirkung.

In Fig.2 ist eine Ausführungsvariante dargestellt, bei welcher ein erster Schalter 13 in Serie mit der ersten Primärwicklung 12 vorgesehen ist. Mittels dieses Schalters 13 kann die erste Primärwicklung 12 vom Primärkreis 10 abgetrennt werden. Unabhängig von der Existenz des ersten kann noch ein zweiter Schalter 15 in Serie mit der zweiten Primärwicklung 14 eingebaut sein.

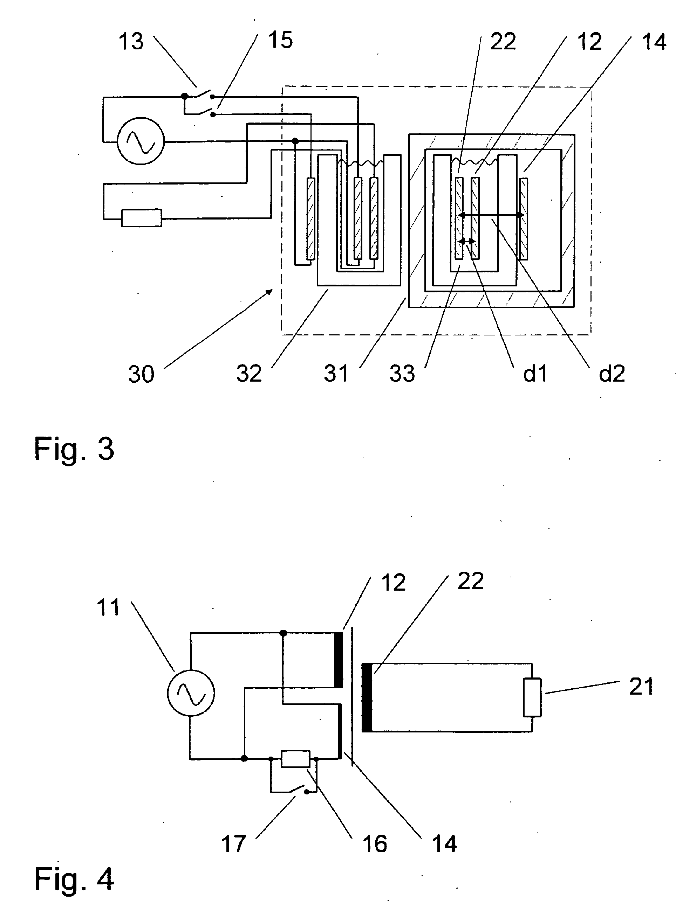

Fig.3 zeigt schematisch die Ausführungsvariante gemäss Fig.2 mit einer Schnittdarstellung des Transformators 30. Sämtliche Wicklungen 12, 14, 22 sind konzentrisch um eine gemeinsame, mit dem Transformatorkern 31 identische Achse gewickelt. Die supraleitende Primär- und Sekundärwicklung 12, 22 befinden sich in einem mit einem Kühlmedium 33 gefüllten Kryostaten 32 und weisen einen radialen Abstand d1 auf. Die zweite Primärwicklung 14 befindet sich ausserhalb des Kryostaten 32, ebenso die beiden Schalter 13, 15. Der radiale Abstand zwischen der zweiten Primärwicklung 14 und der Sekundärwicklung 22 ist mit d2 bezeichnet.

Fig. 4 zeigt eine weitere Ausführungsvariante, bei welcher eine Parallelschaltung aus einer Dämpfungsimpedanz 16, vorzugsweise einem Widerstand, und einem dritten Schalter 17 in Serie zur Entlastungswicklung 14 geschaltet ist. Der dritte Schalter 17 überbrückt in geschlossenem Zustand die Impedanz 16 und kann mit dem oben genannten zweiten Schalter 15 identisch sein.

Im Normalbetrieb ist die erste supraleitende Primärwicklung 12 an die Stromquelle 11 angeschlossen. Tritt nun im Sekundärkreis 20 ein Kurzschluss auf, steigt die Stromstärke sowohl primär- wie auch sekundärseitig stark an und überschreitet die kritische Stromstärke I_{C}(P) der ersten Primärwicklung 12. Es baut sich ein überproportionaler Spannungsabfall auf und die Primärwicklung 12 tritt in den normalleitenden Zustand über. Gleichzeitig bleibt die Impedanz der parallelgeschalteten normalleitenden zweiten Primärwicklung 14 natürlich unverändert, so dass nun der Kurzschluss- oder Überstrom aus der ersten in die zweite Primärwicklung kommutiert.

Der Schalter 13 in Serie zur ersten Primärwicklung 12 gemäss der in Fig. 2 dargestellten Ausführungsform unterstützt deren angestrebte Entlastung noch weiter. Sobald die erste Überstromspitze durch den Supraleiter begrenzt worden ist, wird dieser von der Quelle 11 abgetrennt. Dies geschieht vorzugsweise im Nulldurchgang des durch den Schalter 13 fliessenden Überstromanteils. Der frühestmögliche Zeitpunkt folgt also spätestens nach einer halben Periodendauer, es ist aber angebracht, etwas länger zuzuwarten und den Überstrom durch die erste Primärwicklung 12 beispielsweise nach 20 - 100 ms (bei einer Netzfrequenz von 50-60 Hz) zu unterbrechen. Bis zur Behebung des Kurzschlusses, normalerweise nach einigen 100 ms, bleibt somit für die erste Primärwicklung 12 genügend Zeit zur Wiederabkühlung.

Die zweite Primärwicklung 14 weist normalerweise einen grossen Ohmschen Widerstand auf und ist beispielsweise aus einem Stahldraht gewickelt. Es kann jedoch auch ein vor allem bei tiefen Temperaturen sehr gut leitender Draht aus Kupfer oder Aluminium gewählt werden. In diesem Fall muss aber, um im Kurzschlussfall ein zu starkes Anwachsen des Überstromes durch die zweite Primärwicklung 14 zu verhindern, letztere mit einer zusätzlichen Streuimpedanz versehen werden. Dazu sind die Windungen der zweiten Primärwicklung 14 in einem gewissen Abstand d2 zu den Windungen der Sekundärwicklung 22 gewickelt. Der entsprechende Luftspalt sorgt für die gewünschte induktive Impedanz und erlaubt sogar, die zweite Primärwicklung 14, wie in Fig.3 dargestellt, ausserhalb des Kryostaten 32 anzubringen. Entscheidend für die Auslegung der beiden Primärwicklungen 12, 14 ist das Verhältnis der Gesamtimpedanz der zweiten Wicklung 14 zum Widerstand der ersten Wicklung 12 im normalleitenden Zustand, d.h. nach erfolgter Begrenzung der ersten Überstromspitze.

Im Gegensatz dazu soll die Kopplung der zwei supraleitenden ersten Wicklungen 12, 22 so gut wie möglich sein um die Streuverluste im Normalbetrieb gering zu halten. Ihr radialer Abstand d1 ist dementsprechend möglichst klein zu wählen, unter Berücksichtigung allgemeingültiger Isolationsanforderungen. Dem selben Zweck dient auch der zweite Schalter 15 gemäss Fig.2, der in den Entlastungspfad 14 eingebracht ist und letzteren im Normalbetrieb von der Quelle 11 abtrennen und im Störfall zuschalten kann.

Die gemäss Fig.4 in Serie zur Entlastungswicklung 14 vorgesehene zusätzliche Dämpfungsimpedanz 16 ist für die schnelle Dämpfung eines möglicherweise aperiodischen Kurzschlussstromes zuständig. Entsprechend kann die Impedanz 16 nach kurzer Zeit, beispielsweise innerhalb der zweiten Wechselstromperiode (d.h. 20 - 40 ms bei 50 Hz Netzfrequenz) nach Auftreten des Kurzschlusses, durch Schliessen des dritten Schalters 17 wieder überbrückt werden.

Für die supraleitenden Wicklungen kommt beispielsweise ein Draht in Frage, welcher einen signifikanten Anteil einer supraleitenden Phase in einer als elektrischer Bypass wirkenden Matrix aus nicht supraleitendem Material enthält. Die kritische Stromstärke dieses Drahtes wird über den Drahtquerschnitt oder den Gehalt an Supraleitermaterial beeinflusst. Dabei ist zu beachten, dass die Wechselstromverluste proportional sind zum Volumen des betroffenen Supraleiters. Es ist also auch unter diesem Gesichtspunkt vorteilhaft, den Draht so zu dimensionieren, dass der Nennstrom I_{N} in etwa dem kritischen Strom I_{c} entspricht. Dies ist bei der Primärwicklung 12 des dargestellten Transformators 30 der Fall.

Ist sekundärseitig nur eine Wicklung vorgesehen, so darf diese selbst nicht auch strombegrenzend wirken, da sie sich sonst ebenfalls erwärmen könnte und durch entsprechende Vorkehrungen analog zur Primärseite geschützt werden müsste. Dieser Draht weist also einen hohen Anteil an supraleitendem Material auf oder seine Matrix ist so beschaffen, dass sie einen Überstrom vorübergehend leiten kann, ohne dass sie selbst oder die supraleitende Phase Schaden nimmt. Eine Matrix aus Silber ist dazu geeignet.

Wie eingangs dargelegt ist die gewählte Bezeichnung für den Primär- beziehungsweise Sekundärkreis 10, 20 nicht durch die Quelle 11 beziehungsweise den Verbraucher 21 bestimmt. Selbstverständlich ist es dem Fachmann unbenommen, die die Erfindung charakterisierenden Massnahmen auf die Sekundärseite anzuwenden, d.h. die hier gewählten Bezeichnungen von Primär- und Sekundärseite zu vertauschen. Ebenso ist es möglich, den strombegrenzenden Mechanismus samt Entlastungswicklungen auf beiden Seiten des Transformators vorzusehen. Vorteilhafterweise wird die Entlastungswicklung zumindest auf der Transformatorseite mit dem grösseren Nennstrom ausgeführt, was den bisherigen Ausführungen unter der Annahme entspricht, dass der Transformator die Spannung hochtransformiert oder anders ausgedrückt, dass der primärseitige Nennstrom I_{N}(P) grösser als der sekundärseitige Nennstrom I_{N}(S) ist. Entsprechend ergeben sich die grössten Materialeinsparungen, wenn die supraleitende Primärwicklung 12 zwecks Strombegrenzung und Reduzierung der Wechselstromverluste auf den Nennstrom I_{N}(P) ausgelegt wird und bei den kleineren Nenn- und Kurzschlussströmen auf der Sekundärseite grosszügig dimensioniert wird. Speziell geeignet sind Hochtemperatursupraleitermaterialien, welche mit flüssigem Stickstoff als Kühlmedium 33 auf eine Temperatur unterhalb ihrer kritischen Temperatur T_{c} gekühlt werden können.

Insgesamt ergibt sich unter Verwendung einer erfindungsgemässen normalleitenden Entlastungswicklung 14 ein strombegrenzender supraleitender Transformator 30, der es ermöglicht, einen Verbraucher 21 unterbrechungsfrei mit Energie zu versorgen. Einer übermässigen Erwärmung des Supraleiters 12 infolge eines zu begrenzenden Kurzschlussstromes wird vorgebeugt, so dass ersterer nach dem Wegfall der Störung sofort wieder einsatzbereit ist.

### BEZUGSZEICHENLISTE

- 10: Primärkreis
- 11: Wechselstromquelle
- 12: erste, supraleitende Primärwicklung
- 13: erster Schalter
- 14: zweite, normalleitende Primärwicklung
- 15: zweiter Schalter
- 16: Dämpfungsimpedanz
- 17: Dritter Schalter

- 20: Sekundärkreis
- 21: Verbraucher
- 22: supraleitende Sekundärwicklung

- 30: Transformator
- 31: Transformatorkern
- 32: Kryostat
- 33: Kühlmedium

## Patentansprüche

1. Anordnung zur Strombegrenzung, umfassend einen supraleitenden Transformator (30) mit einer supraleitenden Primärwicklung (12), einer supraleitenden Sekundärwicklung (22) und einer zur Primärwicklung (12) parallelen Entlastungswicklung (14) aus einem normalleitenden Material, **dadurch gekennzeichnet, dass** die supraleitende Primärwicklung (12) eine kritische Stromstärke I_{C}(P) aufweist, die im Wesentlichen einem primärseitigen Nennstrom I_{N}(P) des Transformators (30) entspricht, und dass die Sekundärwicklung (22) eine kritische Stromstärke I_{C}(S) aufweist, welche grösser ist als ein sekundärseitiger Nennstrom I_{N}(S) des Transformators (30), und dass keine weiteren sekundärseitigen Wicklungen vorgesehen sind.

2. Anordnung nach Anspruch 1, **dadurch gekennzeichnet, dass**
a) die Primärwicklung (12) in einem ersten radialen Abstand d1 konzentrisch zur Sekundärwicklung (22) angeordnet ist und
b) die Entlastungswicklung (14) in einem zweiten radialen Abstand d2 konzentrisch zur Sekundärwicklung (22) angeordnet ist und
c) der zweite radiale Abstand d2 grösser ist als der erste radiale Abstand d1.

3. Anordnung nach Anspruch 2, **dadurch gekennzeichnet, dass** ein Kryostat (32) mit einem Kühlmedium (33) zur Kühlung der Primärwicklung (12) und der Sekundärwicklung (22) vorgesehen ist, und dass die Entlastungswicklung (14) ausserhalb des Kryostaten (32) angeordnet ist.

4. Anordnung nach einem der Ansprüche 1 - 3, **dadurch gekennzeichnet, dass** ein erster Schalter (13) zur Unterbrechung der zur Entlastungswicklung (14) parallelen Primärwicklung (12) vorgesehen ist.

5. Anordnung nach Anspruch 4, **dadurch gekennzeichnet, dass** ein zweiter Schalter (15) zur Unterbrechung der Entlastungswicklung (14) vorgesehen ist.

6. Anordnung nach einem der Ansprüche 1 - 3, **dadurch gekennzeichnet, dass** eine Parallelschaltung aus einer Dämpfungsimpedanz (16) und einem dritten Schalter (17) in Serie mit der Entlastungswicklung (14) vorgesehen ist.

7. Verfahren zur Strombegrenzung mit einer einen supraleitenden Transformator (30) umfassenden Anordnung mit einer zu einem ersten Schalter (13) und einer supraleitenden Primärwicklung (12) parallelen normalleitenden Entlastungswicklung (14) nach Anspruch 1, wobei der erste Schalter (13) nach Auftreten eines Kurzschlusses geöffnet und der ganze primärseitige Strom auf die Entlastungswicklung (14) kommutiert wird, **dadurch gekennzeichnet, dass** der erste Schalter (13) in einem Nulldurchgang des ihn durchfliessenden Stromes geöffnet wird.

8. Verfahren nach Anspruch 7, **dadurch gekennzeichnet, dass** der erste Schalter (13) innerhalb von 1 bis 5 Wechselstromperioden nach Auftreten des Kurzschlusses geöffnet wird.

## Claims

1. Arrangement for current limiting, comprising a superconducting transformer (30) having a superconducting primary winding (12), a superconducting secondary winding (22) and a load-reducing winding (14) composed of a normally conductive material in parallel with the primary winding (12), **characterized in that** the superconducting primary winding (12) has a critical current level I_{C}(P), which essentially corresponds to a rated current I_{N}(P) on the primary side of the transformer (30) and **in that** the secondary winding (22) has a critical current level I_{C}(S), which is greater than a rated current I_{N}(S) on the secondary side of the transformer (30), and **in that** no further secondary windings are provided.

2. Arrangement according to Claim 1, **characterized in that**
a) the primary winding (12) is arranged at a first radial distance d1 from, and concentrically with respect to, the secondary winding (22), and
b) the load-reducing winding (14) is arranged at a second radial distance d2, and concentrically with respect to, the secondary winding (22), and
c) the second radial distance d2 is greater than the first radial distance d1.

3. Arrangement according to Claim 2, **characterized in that** a cryostat (32) is provided, having a cooling medium (33) for cooling the primary winding (12) and the secondary winding (22), and **in that** the load-reducing winding (14) is arranged outside the cryostat (32) .

4. Arrangement according to one of Claims 1-3, **characterized in that** a first switch (13) is provided in order to interrupt the primary winding (12) in parallel with the load-reducing winding (14).

5. Arrangement according to Claim 4, **characterized in that** a second switch (15) is provided, in order to interrupt the load-reducing winding (14).

6. Arrangement according to one of Claims 1-3, **characterized in that** a parallel circuit is provided, comprising a damping impedance (16) and a third switch (17) in series with the load-reducing winding (14).

7. Method for current limiting using an arrangement comprising a superconducting transformer (30) and having a normally conductive load-reducing winding (14) in parallel with a first switch (13) and a superconducting primary winding (12) according to Claim 1, wherein the first switch (13) is opened after a short circuit occurs and the entire primary current is commutated to the load-reducing winding (14), **characterized in that** the first switch (13) is opened at a zero crossing of the current flowing through it.

8. Method according to Claim 7, **characterized in that** the first switch (13) is opened within 1 to 5 alternating-current cycles after the short circuit occurs.

## Revendications

1. Système de limitation du courant comprenant un transformateur supraconducteur (30) doté d'un enroulement primaire supraconducteur (12), d'un enroulement secondaire supraconducteur (22) et d'un enroulement de délestage (14) raccordé en parallèle sur l'enroulement primaire (12) et en matériau normalement conducteur, **caractérisé en ce que** l'enroulement primaire supraconducteur (12) présente une intensité critique I_{C}(P) qui correspond essentiellement au courant nominal I_{N}(P) du côté primaire du transformateur (30) et **en ce que** l'enroulement secondaire (22) présente une intensité critique I_{C}(S) supérieure au courant nominal I_{N}(S) du côté secondaire du transformateur (30), et **en ce qu'**aucun enroulement supplémentaire n'est prévu sur le côté secondaire.

2. Système selon la revendication 1, **caractérisé en ce que**
a) l'enroulement primaire (12) est disposé à une première distance radiale d1 concentriquement par rapport à l'enroulement secondaire (22),
b) **en ce que** l'enroulement de délestage (14) est disposé à une deuxième distance radiale d2 concentriquement par rapport à l'enroulement secondaire (22) et
c) **en ce que** la deuxième distance radiale d2 est supérieure à la première distance radiale d1

3. Système selon la revendication 2, **caractérisé en ce qu'**un cryostat (32) doté d'un fluide de refroidissement (33) pour le refroidissement de l'enroulement primaire (12) et de l'enroulement secondaire (22) est prévu et **en ce que** l'enroulement de délestage (14) est disposé à l'extérieur du cryostat (32).

4. Système selon l'une des revendications 1 à 3, **caractérisé en ce qu'**un premier commutateur (13) d'interruption de l'enroulement primaire (12) parallèle à l'enroulement de délestage (14) est prévu.

5. Système selon la revendication 4, **caractérisé en ce qu'**un premier commutateur (15) est prévu pour interrompre l'enroulement de délestage (14).

6. Système selon l'une des revendications 1 à 3, **caractérisé en ce qu'**un circuit parallèle constitué d'une impédance d'atténuation (16) et d'un troisième commutateur (17) est prévu en série sur l'enroulement de délestage (14).

7. Procédé de limitation du courant avec un système qui comprend un transformateur supraconducteur (30) et un enroulement de délestage (14) normalement conducteur raccordé en parallèle à un premier commutateur (13) et à un enroulement primaire supraconducteur (12) selon la revendication 1, dans lequel le premier commutateur (13) s'ouvre après l'apparition d'un court-circuit et la totalité du courant primaire est commutée sur l'enroulement de délestage (14), **caractérisé en ce que** le premier commutateur (13) est ouvert au passage par zéro du courant qui le traverse.

8. Procédé selon la revendication 7, **caractérisé en ce que** le premier commutateur (13) est ouvert après 1 à 5 périodes du courant alternatif après l'apparition du court-circuit.
